# EUROPEAN PATENT APPLICATION

(11) **EP 4 851 813 A1**
(43) Date of publication of application: **09.12.2026**
(21) Application number: 24921801.7
(22) Date of filing: 25.12.2024
(51) Int. Cl.: G06F 12/0862

(54) **DATA PREFETCH METHOD AND DEVICE**

(30) Priority: 31.01.2024 CN 202410139398
(71) Applicant: Smarter Silicon (Shanghai) Technologies Co., Ltd., Shanghai 201203 (CN)
(72) Inventor: GAO, Yuxiang, Shanghai 201203 (CN); SUN, Zhiwen, Shanghai 201203 (CN); MA, Meng, Shanghai 201203 (CN)
(74) Representative: Mewburn Ellis LLP
(86) International application number: PCT/CN2024/142156
(87) International publication number: WO 2025/161779

(57) **Abstract**

The present application discloses a data prefetch method and device. The method comprises: obtaining a prefetch request, wherein the prefetch request is used for indicating prefetch data extracted from a memory to a cache, and the cache comprises a plurality of spaces with different spatial levels; on the basis of a historical data request of a cache data user, determining a prefetch level of the prefetch request, wherein the prefetch level is used for representing the usefulness of the prefetch data; and extracting the prefetch data corresponding to the prefetch request from the memory to a space whose spatial level matches the prefetch level of the prefetch request.

## Description

This application claims priority to Chinese Patent Application No. 202410139398.0, titled "DATA PREFETCH METHOD AND DEVICE", filed on January 31, 2024, the entire content of which is incorporated herein by reference.

### TECHNICAL FIELD

The present disclosure relates to the field of computer technologies, and in particular, to a data prefetch method and apparatus.

### BACKGROUND

Prefetch is a technique used by a Central Processing Unit (CPU), in which the data needed by an instruction is fetched from memory into a cache (Cache) before the instruction is actually executed, so that the CPU can immediately obtain the data, thereby improving execution performance. In the related art, the existing prefetch mechanisms are still not sufficiently effective and are likely to cause Cache pollution (for example, additional prefetched data occupies the limited space of the Cache, causing useful data in the Cache to be replaced), thereby degrading the execution performance of the CPU.

### SUMMARY

The present disclosure provides a data prefetch method and apparatus, including the following technical solutions:
One aspect of the present disclosure provides a data prefetch method, including: obtaining a prefetch request, wherein the prefetch request is used to indicate prefetch data to be fetched from memory into a cache, and the cache comprises a plurality of spaces having different space levels; determining, based on historical data requests of a cache data user, a prefetch level of the prefetch request, wherein the prefetch level is used to represent the usefulness of the prefetch data; and fetching the prefetch data corresponding to the prefetch request from the memory into a space whose space level matches the prefetch level of the prefetch request.

In an embodiment, fetching the prefetch data corresponding to the prefetch request from the memory into a space whose space level matches the prefetch level of the prefetch request includes: determining a target space whose space level matches the prefetch level of the prefetch request; determining a response status of the target space based on data requests responded to by the target space; and in response to the response status of the target space being idle, fetching the prefetch data corresponding to the prefetch request from the memory into the target space.

In an embodiment, in response to the response status of the target space being busy, the prefetch data corresponding to the prefetch request is fetched from the memory into a first space; where the first space includes a space whose space level is lower than the space level of the target space and whose response status is idle; and where the usefulness of data stored in the first space is lower than the usefulness of data stored in the target space.

In an embodiment, in response to the response status of the target space being busy and the space level of the target space being the lowest space level, the prefetch request is canceled.

In an embodiment, determining the prefetch level of the prefetch request based on historical data requests of a cache data user includes: determining, based on historical data requests of the cache data user, a confidence level of the prefetch request; where the confidence level is used to represent a probability that the prefetch data corresponding to the prefetch request is used by the cache data user; and determining the prefetch level of the prefetch request based on the confidence level of the prefetch request; where a higher confidence level corresponds to a higher prefetch level.

In an embodiment, determining the prefetch level of the prefetch request based on historical data requests of a cache data user includes: determining, based on historical data requests of the cache data user, an initial prefetch level of the prefetch request; determining, based on a preset matching relationship between space levels and prefetch levels, an initial space whose space level matches the initial prefetch level; and determining the prefetch level of the prefetch request based on data characteristics of the initial space.

In an embodiment, the data characteristics include a data utilization rate, the data utilization rate being determined based on a number of data prefetches and a number of data hits during a historical period, where determining the prefetch level of the prefetch request based on the data characteristics of the initial space includes: determining the data utilization rate of the initial space; and in response to the data utilization rate of the initial space satisfying a threshold, determining the initial prefetch level as the prefetch level of the prefetch request based on the initial prefetch level.

In an embodiment, in response to the data utilization rate of the initial space being greater than the threshold, determining that the prefetch level of the prefetch request is higher than the initial prefetch level; where, in response to the initial prefetch level being the highest prefetch level, determining the initial prefetch level as the prefetch level of the prefetch request based on the initial prefetch level.

In an embodiment, in response to the data utilization rate of the initial space being less than the threshold, determining that the prefetch level of the prefetch request is lower than the initial prefetch level; where, in response to the initial prefetch level being the lowest prefetch level, canceling the prefetch request.

Another aspect of the present disclosure provides a data prefetch apparatus. The apparatus includes: a request determination unit, configured to obtain a prefetch request, where the prefetch request indicates prefetch data to be fetched from a memory into a cache, the cache including multiple spaces having different space levels; a level determination unit, configured to determine, based on historical data requests of a cache data user, a prefetch level of the prefetch request, the prefetch level representing usefulness of the prefetch data; and a data extraction unit, configured to fetch the prefetch data corresponding to the prefetch request from the memory into a space having a space level matching the prefetch level of the prefetch request.

In an embodiment, the data extraction unit is further configured to: determine a target space having a space level matching the prefetch level of the prefetch request; determine a response status of the target space based on data requests responded to by the target space; and in response to determining that the response status of the target space is idle, fetch the prefetch data corresponding to the prefetch request from the memory into the target space.

In an embodiment, the data extraction unit is further configured to: in response to determining that the response status of the target space is busy, fetch the prefetch data corresponding to the prefetch request from the memory into a first space, where the first space includes a space having a space level lower than the space level of the target space and having an idle response status, and where usefulness of data stored in the first space is lower than usefulness of data stored in the target space.

In an embodiment, the data extraction unit is further configured to: in response to determining that the response status of the target space is busy and the space level of the target space is a lowest space level, cancel the prefetch request.

In an embodiment, the level determination unit is further configured to: determine, based on the historical data requests of the cache data user, a confidence level of the prefetch request, the confidence level representing a probability that the prefetch data corresponding to the prefetch request will be used by the cache data user; and determine the prefetch level of the prefetch request based on the confidence level, where a higher confidence level corresponds to a higher prefetch level.

In an embodiment, the level determination unit is further configured to: determine, based on the historical data requests of the cache data user, an initial prefetch level of the prefetch request; determine, based on a preset matching relationship between space levels and prefetch levels, an initial space having a space level matching the initial prefetch level; and determine the prefetch level of the prefetch request based on data characteristics of the initial space.

In an embodiment, the data characteristics include a data utilization rate determined based on a number of data prefetches and a number of data hits during a historical period, and the level determination unit is further configured to: determine the data utilization rate of the initial space; and in response to determining that the data utilization rate satisfies a threshold, determine the initial prefetch level as the prefetch level of the prefetch request.

In an embodiment, the level determination unit is further configured to: in response to determining that the data utilization rate of the initial space is greater than the threshold, determine that the prefetch level of the prefetch request is higher than the initial prefetch level, where, in response to determining that the initial prefetch level is a highest prefetch level, the level determination unit determines the initial prefetch level as the prefetch level of the prefetch request.

In an embodiment, the level determination unit is further configured to: in response to determining that the data utilization rate of the initial space is less than the threshold, determine that the prefetch level of the prefetch request is lower than the initial prefetch level, where, in response to determining that the initial prefetch level is a lowest prefetch level, the level determination unit cancels the prefetch request.

### BRIEF DESCRIPTION OF THE DRAWINGS

To describe the technical solutions in the embodiments of the present disclosure or the related art more clearly, the accompanying drawings required for the description of the embodiments or the related art will be briefly introduced below. Apparently, the accompanying drawings described below merely illustrate some embodiments of the present disclosure. A person of ordinary skill in the art may also obtain other accompanying drawings based on these accompanying drawings without creative effort.
FIG. 1 is a schematic flowchart of a data prefetch method according to an embodiment of the present disclosure.
FIG. 2 is a schematic flowchart of another data prefetch method according to an embodiment of the present disclosure.
FIG. 3 is a schematic flowchart of another data prefetch method according to an embodiment of the present disclosure.
FIG. 4 is a schematic flowchart of another data prefetch method according to an embodiment of the present disclosure.
FIG. 5 is a schematic flowchart of another data prefetch method according to an embodiment of the present disclosure.
FIG. 6 is a schematic flowchart of another data prefetch method according to an embodiment of the present disclosure.
FIG. 7 is a schematic flowchart of another data prefetch method according to an embodiment of the present disclosure.
FIG. 8 is a schematic diagram of component relationships according to an embodiment of the present disclosure.
FIG. 9 is a schematic flowchart of another data prefetch method according to an embodiment of the present disclosure.
FIG. 10 is a schematic architecture diagram of a data prefetch apparatus according to an embodiment of the present disclosure.

### DETAILED DESCRIPTION OF THE EMBODIMENTS

The technical solutions in the embodiments of the present disclosure will be described clearly and completely below with reference to the accompanying drawings in the embodiments of the present disclosure. Apparently, the described embodiments are merely some embodiments of the present disclosure, rather than all embodiments. All other embodiments obtained by a person of ordinary skill in the art based on the embodiments of the present disclosure without creative effort shall fall within the scope of the present disclosure.

In the present disclosure, relational terms such as "first" and "second" are used merely to distinguish one entity or operation from another entity or operation, and do not necessarily require or imply any actual relationship or order between those entities or operations. The terms "include," "contain," or any other variations thereof are intended to cover a non-exclusive inclusion, such that a process, method, article, or apparatus that includes a series of elements includes not only those elements, but also other elements not expressly listed, or elements inherent in such process, method, article, or apparatus. Unless further limited, an element defined by the phrase "including one ..." does not preclude the presence of another identical element in a process, method, article, or apparatus that includes the element.

### Embodiment 1

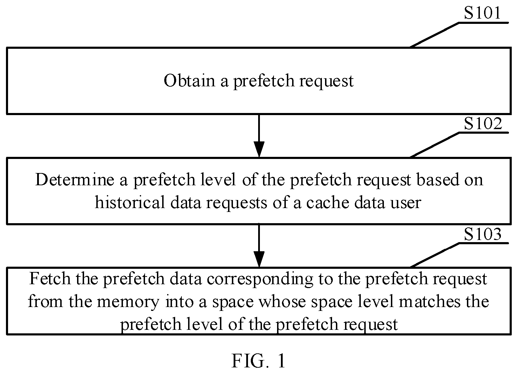

As shown in FIG. 1, a schematic flowchart of a data prefetch method according to an embodiment of the present disclosure is illustrated, which may be applied to a chip of an electronic device and includes the following operations.

S101: A prefetch request is obtained.

The prefetch request is used to indicate prefetch data to be fetched from memory into a cache, where the cache includes a plurality of spaces having different space levels.

In some examples, the CPU is preset with a prefetcher. The prefetcher estimates data that will be needed by the CPU in the future based on data required for instructions currently being executed by the CPU, and generates one or more prefetch requests based on the estimation result. Each prefetch request is used to indicate prefetch data to be fetched from memory into a cache, and the prefetch data corresponding to the respective prefetch requests has an execution order, where the execution order of each item of prefetch data represents the order in which the corresponding prefetch data is used by the CPU.

In some examples, the spaces in the cache have different space levels. The higher the space level, the closer the space is to the processing unit of the CPU. Correspondingly, the CPU access speed of a space having a higher space level is higher than that of a space having a lower space level. Since spaces having different space levels correspond to different CPU access speeds, the usefulness of data stored in spaces having different space levels (the so-called usefulness refers to the probability of being read by the CPU) can be distinguished. Data having higher usefulness may be allocated to a space having a higher space level, while data having lower usefulness may be allocated to a space having a lower space level.

In one possible implementation, the plurality of spaces of the cache may include an L2 (Level-2 cache) space, an L3 (Level-3 cache) space, and an LLC (Last Level Cache) space. The space level of the L2 space is higher than that of the L3 space, and the space level of the L3 space is higher than that of the LLC space. In addition, the allocation of the respective spaces in the cache and the division of the space level of each space may be configured according to the hardware architecture of the chip.

S102: A prefetch level of the prefetch request is determined based on historical data requests of a cache data user.

The prefetch level is used to represent the usefulness of the prefetch data.

It should be noted that the cache data user may be the CPU. The historical data requests of the CPU specifically refer to data read by the CPU during a historical period, i.e., data required for the CPU to execute multiple instructions in the past.

In some examples, the CPU executes 100 instructions during a historical period, and the data required for execution of each instruction is obtained based on the historical data requests of the CPU. Accordingly, the historical data requests corresponding to the 100 instructions may be analyzed to determine a prefetch level of a predicted request.

It can be understood that determining the prefetch level of the predicted request is essentially determining the usefulness of the prefetch data corresponding to the prefetch request, that is, performing data analysis on data historically requested by the CPU to determine the usefulness of the prefetch data, so as to determine the space to which the prefetch data belongs based on the usefulness of the prefetch data.

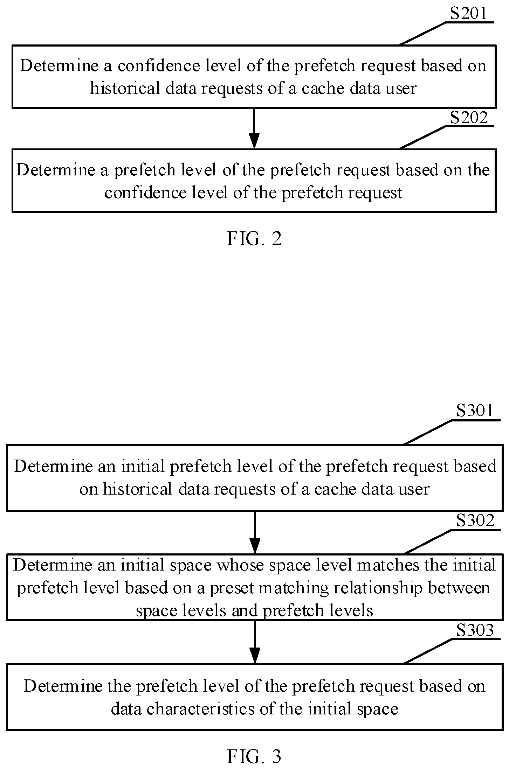

In some embodiments, for the specific implementation process of determining the prefetch level of the prefetch request based on historical data requests of a cache data user, reference may be made to the operations shown in FIG. 2 and the explanation of those operations.

S103: The prefetch data corresponding to the prefetch request is fetched from the memory into a space whose space level matches the prefetch level of the prefetch request.

After the prefetch level of the prefetch request is determined, the prefetch data is fetched from the memory into a space whose space level matches the prefetch level with reference to the usefulness of the prefetch data, thereby avoiding fetching useless prefetch data into the cache and effectively avoiding cache pollution.

It should be noted that, when the prefetch data is fetched into a space, the data prestored in the space may be interfered with by the prefetch data. For example, if the data prestored in a space is currently being used by the CPU, fetching the prefetch data into that space may interfere with the CPU's access to the data in that space, thereby affecting the execution performance of the CPU. Therefore, when the prefetch data is fetched into a space, the response status of the space also needs to be considered so as to avoid affecting the CPU's access to existing data in the cache.

In some examples, the response status may be used to represent the frequency with which the CPU accesses data in the space. The data access frequency may be determined based on data requests responded to by the space within a specified period.

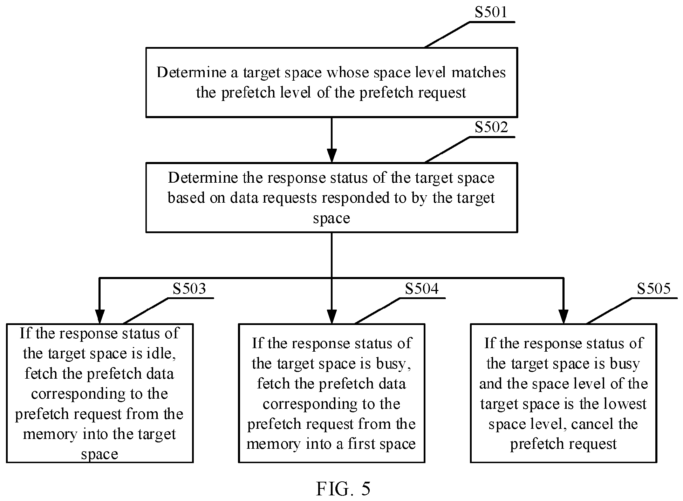

In some embodiments, for the specific implementation process of fetching the prefetch data corresponding to the prefetch request from the memory into a space whose space level matches the prefetch level of the prefetch request, reference may be made to the operations shown in FIG. 5 and the explanation of those operations.

In some examples, the operations shown in this embodiment may be performed by a preset dynamic adjuster. The dynamic adjuster serves as part of the chip and is configured to receive a prefetch request sent by the prefetcher and, in response to the prefetch request, fetch the prefetch data corresponding to the prefetch request from the memory into a space of the cache.

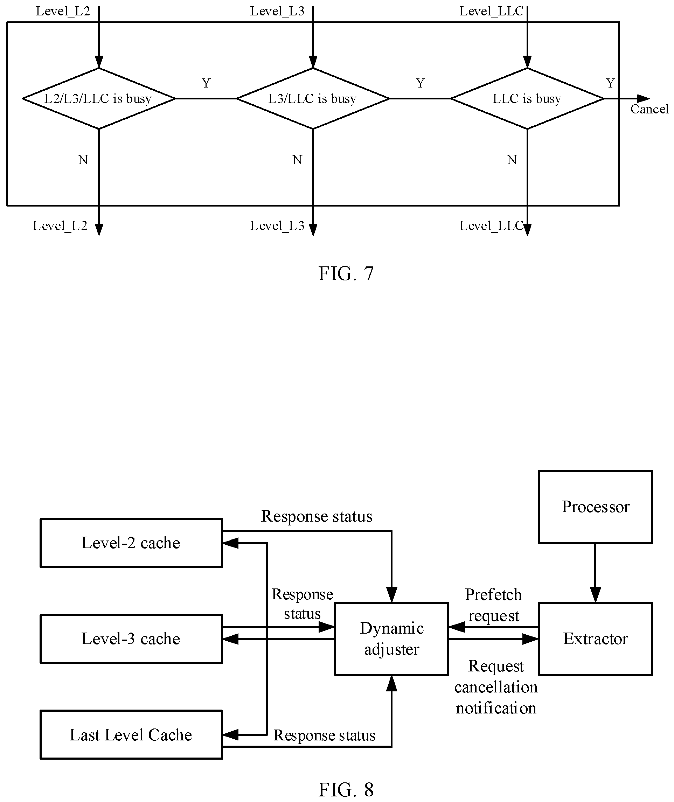

In one possible implementation, the relationship among the cache, the dynamic adjuster, the prefetcher, and the processor may be understood with reference to FIG. 8. In the relationship diagram shown in FIG. 8, the prefetcher generates a prefetch request based on processed data requests and sends the prefetch request to the dynamic adjuster. The dynamic adjuster obtains the response status from each space of the cache and, after determining the space in which the prefetch data is to be stored based on the response status and the prefetch level of the prefetch request, fetches the prefetch data from the memory into the cache. If the prefetch request does not satisfy the prefetch conditions, the dynamic adjuster also cancels the prefetch request and sends a request cancellation notification to the prefetcher.

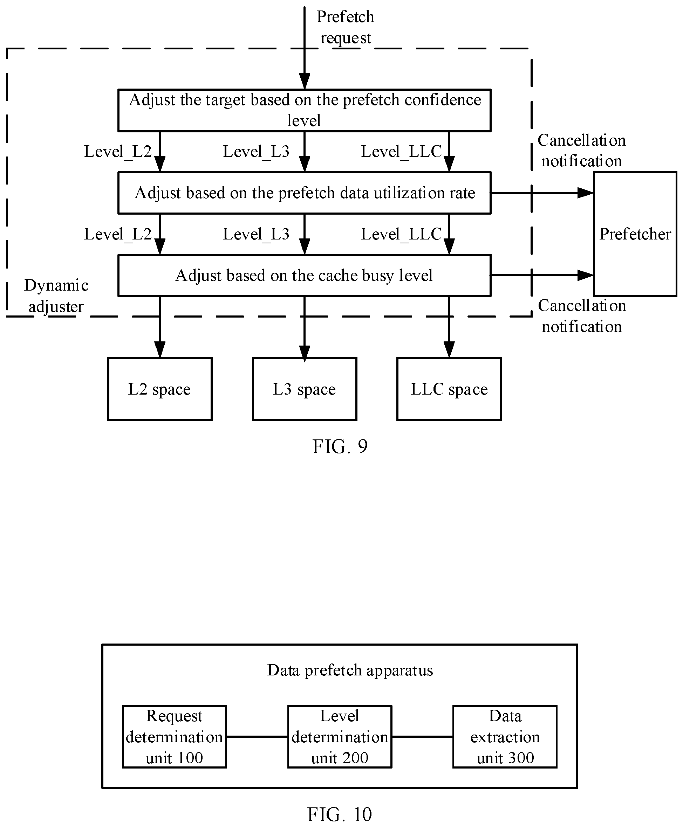

In some examples, in combination with the methods shown in Embodiment 2, Embodiment 3, Embodiment 4, and Embodiment 5 described below, the specific process by which the dynamic adjuster shown in FIG. 8 performs data prefetch may also be summarized as the operations shown in FIG. 9: determining an initial prefetch level of the prefetch request based on the confidence level of the prefetch request (that is, adjusting a target according to the prefetch confidence level as shown in FIG. 9, where the target may be understood as the initial prefetch level); determining the prefetch level of the prefetch request according to the data utilization rate of an initial space whose space level matches the initial prefetch level (that is, adjustment according to the prefetch data utilization rate as shown in FIG. 9); determining the final storage space of the prefetch data corresponding to the prefetch request based on the response status of a target space whose space level matches the prefetch level (that is, adjustment according to the cache busy level as shown in FIG. 9, where the busy level is used to represent the response status); and, for a prefetch request that does not satisfy the prefetch conditions, canceling execution of the prefetch request (that is, sending a cancellation notification to the prefetcher as shown in FIG. 9).

Through the process shown in S101-S103, through the operations of determining the prefetch level of the prefetch request based on historical data requests and allocating the prefetch data to a cache space whose space level matches the determined prefetch level, the present disclosure dynamically controls placement of prefetched data among cache spaces of different space levels. In this manner, unnecessary prefetches into high-value cache spaces are reduced, cache pollution is avoided, and both the coverage and accuracy of data prefetch are improved.

### Embodiment 2

As shown in FIG. 2, a schematic flowchart of another data prefetch method according to an embodiment of the present disclosure is illustrated, which includes the following operations.

S201: A confidence level of the prefetch request is determined based on historical data requests of a cache data user.

The confidence level is used to represent the probability that the prefetch data corresponding to the prefetch request will be used by the cache data user. In one possible implementation, the confidence level may be used to represent the probability that the prefetch data corresponding to the prefetch request will be directly read by the CPU from the cache.

In some examples, based on historical data requests of the CPU, memory addresses of data historically used by the CPU may be obtained. By performing data analysis on the memory addresses of the respective historical data, at least one memory address pattern and a confidence level corresponding to each memory address pattern may be obtained. Finally, the confidence level of the prefetch request is determined based on the confidence level of each memory address pattern and the memory address pattern satisfied by the memory address of the prefetch data corresponding to the prefetch request.

The memory address pattern is used to represent a mathematical correlation among the memory addresses of multiple items of historical data. For example, if the memory addresses of multiple items of historical data are 0 bit, 1 bit, 2 bit, ..., and 8 bit, respectively, data analysis is performed on the memory addresses of the multiple items of historical data to determine a first memory address pattern (i.e., representing that the memory addresses of data between two adjacent positions differ by 1 bit).

In one possible implementation, based on 100 items of historical data indicated by historical data requests of the CPU, multiple memory address patterns are determined, including a first memory address pattern (representing that the memory addresses of data between two adjacent positions differ by 1 bit), a second memory address pattern (representing that the memory addresses of data between two adjacent positions differ by 5 bits), and a third memory address pattern (representing that the memory addresses of data between two adjacent positions differ by 10 bits). The confidence level of the first memory address pattern is 50% (indicating that 50 items of historical data satisfy the first memory address pattern), the confidence level of the second memory address pattern is 30% (indicating that 30 items of historical data satisfy the second memory address pattern), and the confidence level of the third memory address pattern is 20% (indicating that 20 items of historical data satisfy the third memory address pattern). If the memory address of the prefetch data corresponding to the currently obtained prefetch request satisfies the first memory address pattern, the confidence level of the prefetch request is determined to be 50%.

It should be noted that, in the related art, to improve data prefetch efficiency, multiple prefetch requests are typically executed concurrently. In a scenario in which multiple prefetch requests are executed, when determining the confidence levels of the multiple prefetch requests, the confidence level of each prefetch request may also be adjusted based on the execution order corresponding to each prefetch request, so as to provide a more reliable confidence level for each prefetch request. Generally, the earlier the execution order, the earlier the prefetch data corresponding to the prefetch request will be used by the CPU. The later the execution order, the later the prefetch data corresponding to the prefetch request will be used by the CPU. Therefore, the confidence level of a prefetch request having an earlier execution order is higher than that of a prefetch request having a later execution order.

In some examples, based on the execution order of multiple prefetch requests, weighting coefficients matching the confidence levels of the multiple prefetch requests may be determined. The earlier the execution order, the greater the weighting coefficient. The later the execution order, the smaller the weighting coefficient.

In one possible implementation, the multiple prefetch requests include Request A, Request B, and Request C. The execution order corresponding to Request A is first, the execution order corresponding to Request B is second, and the execution order corresponding to Request C is third. The initial confidence level of Request A (i.e., the confidence level determined according to the memory address pattern) is 50%, the initial confidence level of Request B is 40%, and the initial confidence level of Request C is 10%. The first execution order is higher than the second execution order, and the second execution order is higher than the third execution order. Based on the respective execution orders of Request A, Request B, and Request C, the weighting coefficient matching the confidence level of Request A is determined to be 0.5, the weighting coefficient matching the confidence level of Request B is determined to be 0.3, and the weighting coefficient matching the confidence level of Request C is determined to be 0.2. According to the respective weighting coefficients, weighted coupling is separately performed on the confidence levels of Request A, Request B, and Request C, thereby obtaining an adjusted confidence level of Request A of 50% × 0.5 = 25%, an adjusted confidence level of Request B of 40% × 0.3 = 12%, and an adjusted confidence level of Request C of 10% × 0.2 = 2%.

S202: A prefetch level of the prefetch request is determined based on the confidence level of the prefetch request.

The higher the confidence level, the higher the prefetch level.

In some examples, the prefetch level corresponding to the confidence level of the prefetch request may be determined based on a preset correspondence between confidence levels and prefetch levels.

It should be noted that the classification of prefetch levels is consistent with the classification of the space levels of the respective spaces in the cache. In one possible implementation, if the space levels are classified into N levels, the prefetch levels are also classified into N levels, where N is a positive integer.

In some examples, the classification of prefetch levels may also be implemented by using a register-based dynamic allocation approach. The implementation process of the dynamic allocation may include: determining N registers based on the number N of spaces in the cache, where each register has a different preset threshold, the threshold is used to distinguish the prefetch level corresponding to a confidence level, the respective registers are invoked to classify the confidence level of the prefetch request, and the prefetch level of the prefetch request is determined based on the register to which the prefetch request belongs.

In one possible implementation, the cache includes an L2 space, an L3 space, and an LLC space. Correspondingly, the registers include a first register, a second register, and a third register. The first register corresponds to the L2 space, the second register corresponds to the L3 space, and the third register corresponds to the LLC space. If the confidence level of the prefetch request belongs to the first register, the prefetch level of the prefetch request is determined to be level_L2. If the confidence level of the prefetch request belongs to the second register, the prefetch level of the prefetch request is determined to be level_L3. If the confidence level of the prefetch request belongs to the third register, the prefetch level of the prefetch request is determined to be level_LLC.

In one possible implementation, the level of level_L2 is higher than that of level_L3, and the level of level_L3 is higher than that of level_LLC.

It should be noted that, after the prefetch level of the prefetch request is determined according to the confidence level of the prefetch request, the cache space in which the prefetch data corresponding to the prefetch request is stored can be determined according to the prefetch level. However, the allocation of the respective spaces in the cache is predetermined based on the hardware architecture, and the data utilization probability of each space (i.e., the probability of being accessed by the CPU) changes over time. Therefore, the expected level of the prefetch request may be further determined according to the data utilization probability of the space, thereby further improving the coverage and accuracy of prefetch.

In the related art, the performance of a prefetch mechanism is generally evaluated from two aspects: coverage and accuracy. Coverage refers to the ratio of prefetch data misses (a miss means that the CPU does not obtain data directly from the cache, whereas a hit means that the CPU obtains data directly from the cache) to all misses. For example, if 100 misses occur without a prefetch mechanism and the number of misses is reduced to 30 after introducing the prefetch mechanism, this means that the prefetch mechanism successfully avoids 70 misses, and the coverage is 70/100 = 70%. Accuracy refers to the ratio of prefetch data that is actually used to all issued prefetch requests. For example, if the prefetch mechanism issues a total of 140 prefetch requests and the prefetch data corresponding to 70 of those prefetch requests is used by the CPU, the accuracy is 70/140 = 50%.

Apparently, fetching the prefetch data from the memory into a space whose space level matches the prefetch level of the prefetch request also achieves storage of the prefetch data. Compared with the related art, in which data is stored in the respective spaces of the cache only based on factors such as the size of the cache space (for example, if the remaining storage space of the L2 space is greater than that of the L3 space, directly fetching prefetch data whose data usefulness matches the L3 space from the memory into the L2 space will cause cache pollution in the L2 space), the hit rate of the respective spaces in the cache can be improved.

In the related art, the hit rate is a key performance indicator of the cache, and the hit rate is correlated with the accuracy of data prefetch. As the hit rate increases, the accuracy also increases. Because the capacity of the cache is much smaller than that of the memory, the amount of data stored in the cache is less than that stored in the memory. Therefore, the CPU naturally accesses the cache before accessing the memory. If the data is found in the cache, it is considered a hit, whereas if the data is found in the memory, it is considered a miss. Assuming that the CPU performs 100 accesses and successfully accesses data from the cache 99 times, the hit rate is 99%.

In some embodiments, for the specific implementation process of determining the prefetch level of the prefetch request based on historical data requests of a cache data user, reference may also be made to the operations shown in FIG. 3 and the explanation of those operations.

Through the process shown in S201-S202, the confidence level of the prefetch request can be used to determine the prefetch level of the prefetch request, thereby classifying the confidence level of the prefetch request, such that the prefetch level takes into account the data usage habits of the cache data user and is able to represent the probability that the prefetch data will be used by the cache data user.

### Embodiment 3

As shown in FIG. 3, a schematic flowchart of another data prefetch method according to an embodiment of the present disclosure is illustrated, which includes the following operations.

S301: An initial prefetch level of the prefetch request is determined based on historical data requests of a cache data user.

The initial prefetch level of the prefetch request is determined based on historical data requests of a cache data user, where the initial prefetch level is not the final prefetch level of the prefetch request.

S302: An initial space whose space level matches the initial prefetch level is determined based on a preset matching relationship between space levels and prefetch levels.

The initial space serves as the space to which the prefetch data corresponding to the prefetch request is initially allocated. The usefulness of data pre-stored in the initial space is similar to the usefulness of the prefetch data. However, as time progresses (which may be understood as the CPU using an increasing amount of data), the usefulness of the data pre-stored in the initial space changes. Therefore, the usefulness of the data pre-stored in the initial space needs to be re-evaluated to determine whether the prefetch data should be allocated to the initial space.

In one possible implementation, the space levels include L2, L3, and LLC, and the prefetch levels include level_L2, level_L3, and level_LLC. level_L2 matches L2, level_L3 matches L3, and level_LLC matches LLC. If the initial prefetch level is level_L2, the initial space is determined to be the L2 space. If the initial prefetch level is level_L3, the initial space is determined to be the L3 space. If the initial prefetch level is level_LLC, the initial space is determined to be the LLC space.

S303: A prefetch level of the prefetch request is determined based on data characteristics of the initial space.

By analyzing the data characteristics of the initial space, the usefulness of the data pre-stored in the initial space can be obtained. Based on the usefulness of the data pre-stored in the initial space, the prefetch level of the prefetch request can be further adjusted, thereby fur ther improving the accuracy of data prefetch.

It can be understood that, if the initial prefetch level determined based on the confidence level of the prefetch request is incorrect, determining the prefetch level of the prefetch request again based on the data characteristics of the initial space can promptly eliminate errors caused by the initial prefetch level.

It should be noted that the data characteristics of the initial space may be used to represent the pattern of the CPU's data read and write operations on the initial space. Based on the pattern of the CPU's data read and write operations on the initial space, the usefulness of the data pre-stored in the initial space can be determined, i.e., the usefulness of all data in the initial space can be determined. A data read operation refers to the CPU reading data from the initial space, and a data write operation (including a data prefetch operation and a non-data-prefetch operation) refers to writing data from the memory into the initial space.

In some examples, the initial space includes Data A and Data B. Data A is written into the initial space through a data prefetch operation, and Data B is written into the initial space through a non-data-prefetch operation. If Data B is read once by the CPU, the usefulness of all data in the initial space is 1/2 = 50%.

A non-data-prefetch operation refers to responding to the CPU's request only after the CPU initiates a data usage request, by transferring the corresponding data from the memory into the cache for use by the CPU.

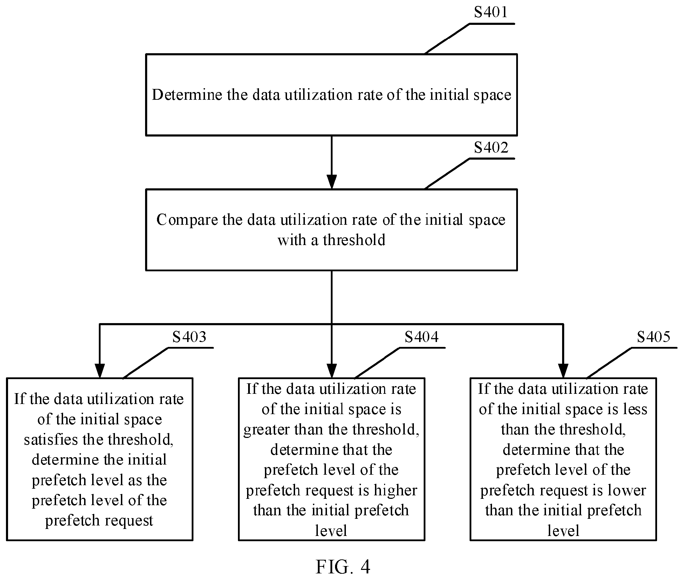

In some embodiments, data write operations include data prefetch operations and non-data-prefetch operations. Since the present solution is primarily directed to improvements to the prefetch scheme, including non-data-prefetch operations cannot accurately reflect the usefulness of the prefetch data in the initial space. Therefore, the usefulness of all prefetch data in the initial space may be represented based on the data utilization rate (the data utilization rate is determined based on the number of data prefetches and the number of data hits), thereby improving the reliability of the usefulness of the prefetch data. In some examples, for the specific implementation process of determining the prefetch level of the prefetch request based on the data utilization rate of the initial space, reference may be made to the operations shown in FIG. 4 and the explanation of those operations.

Through the process shown in S301-S303, by dynamically adjusting the prefetch level according to both historical data requests and the data characteristics of the initial space, the usefulness estimate of the prefetch data is refined, allowing the prefetch data to be allocated to a cache space that more closely matches its expected usefulness, thereby reducing cache pollution and improving prefetch accuracy.

### Embodiment 4

As shown in FIG. 4, a schematic flowchart of another data prefetch method according to an embodiment of the present disclosure is illustrated, which includes the following operations.

S401: A data utilization rate of the initial space is determined.

The data utilization rate is determined based on the number of data prefetches and the number of data hits during a historical period. The number of data prefetches is used to represent the number of times the CPU performs data prefetch operations for the initial space. The number of data hits is used to represent the number of times the CPU directly reads data from the initial space.

In some examples, the data utilization rate may be represented as the ratio between the number of data hits and the number of data prefetches. In one possible implementation, if the number of data hits of the initial space during a historical period is 200 and the number of data prefetches is 1,000, the data utilization rate of the initial space is determined to be 200/1000 = 20%.

S402: The data utilization rate of the initial space is compared with a threshold.

The cache includes a plurality of spaces, and the threshold against which the data utilization rate of each space is compared may be the same or different.

In some examples, the cache includes an L2 space, an L3 space, and an LLC space. The L2 space, the L3 space, and the LLC space may each correspond to the same threshold (for example, 50%), or the L2 space may correspond to a first threshold (for example, 60%), the L3 space may correspond to a second threshold (for example, 50%), and the LLC space may correspond to a third threshold (for example, 40%).

S403: If the data utilization rate of the initial space satisfies the threshold, the initial prefetch level is determined as the prefetch level of the prefetch request based on the initial prefetch level.

If the data utilization rate of the initial space satisfies the threshold, it indicates that the usefulness of the data pre-stored in the initial space has not changed significantly. The data usefulness represented by the initial prefetch level of the prefetch request matches the usefulness of the data pre-stored in the initial space. Therefore, the initial prefetch level is determined as the prefetch level of the prefetch request based on the initial prefetch level.

It should be noted that determining the initial prefetch level as the prefetch level of the prefetch request based on the initial prefetch level essentially means allocating the prefetch data corresponding to the prefetch request to the initial space.

In one possible implementation, the initial space is the L2 space, and the initial prefetch level is level_L2. If the data utilization rate of the initial space satisfies the threshold, level_L2 is determined as the prefetch level of the prefetch request based on level_L2.

S404: If the data utilization rate of the initial space is greater than the threshold, the prefetch level of the prefetch request is determined to be higher than the initial prefetch level.

If the initial prefetch level is the highest prefetch level, the initial prefetch level is determined as the prefetch level of the prefetch request based on the initial prefetch level.

It should be noted that, if the data utilization rate of the initial space is greater than the threshold, this indicates that the usefulness of the data pre-stored in the initial space has increased. Correspondingly, the usefulness of the prefetch data corresponding to the prefetch request also increases. Therefore, the prefetch level of the prefetch request needs to be increased so that it is higher than the initial prefetch level. Of course, if the initial prefetch level is the highest prefetch level and the prefetch level of the prefetch request cannot be increased beyond the initial prefetch level, the highest prefetch level is determined as the prefetch level of the prefetch request.

In one possible implementation, the initial space is the L2 space, and the initial prefetch level is level_L2. If the data utilization rate of the initial space is greater than the threshold and level_L2 is the highest prefetch level, the prefetch level of the prefetch request is determined to be level_L2.

In one possible implementation, the initial space is the L3 space, and the initial prefetch level is level_L3. If the data utilization rate of the initial space is greater than the threshold and level_L2 is above level_L3, the prefetch level of the prefetch request is determined to be level_L2.

In one possible implementation, the initial space is the LLC space, and the initial prefetch level is level_LLC. If the data utilization rate of the initial space is greater than the threshold and level_L2 and level_L3 are above level_LLC, the prefetch level of the prefetch request is determined to be level_L2 or level_L3.

Preferably, if the data utilization rate of the initial space is greater than the threshold and there are multiple prefetch levels above the initial prefetch level, the prefetch level of the prefetch request may be determined based on the upper level that is closest to the initial prefetch level. In one possible implementation, the initial space is the LLC space, and the initial prefetch level is level_LLC. If the data utilization rate of the initial space is greater than the threshold and level_L2 and level_L3 are above level_LLC, the prefetch level of the prefetch request is determined to be level_L3.

Preferably, the thresholds corresponding to the respective spaces in the cache are different, and the higher the space level, the higher the corresponding threshold. The prefetch level of the prefetch request may also be determined in combination with the difference between the threshold corresponding to each space and the data utilization rate. In one possible implementation, the initial space is the LLC space, and the initial prefetch level is level_LLC. If the data utilization rate of the initial space is 52%, level_L2 and level_L3 are above level_LLC, the threshold corresponding to the LLC space is 30%, the threshold corresponding to the L3 space is 50%, and the threshold corresponding to the L2 space is 80%. Based on the difference between the threshold corresponding to each space and the data utilization rate, it is determined that the difference between the threshold corresponding to the L3 space and the data utilization rate of the initial space is the smallest. Therefore, the prefetch level of the prefetch request is determined to be level_L3.

S405: If the data utilization rate of the initial space is less than the threshold, the prefetch level of the prefetch request is determined to be lower than the initial prefetch level.

If the initial prefetch level is the lowest prefetch level, the prefetch request is canceled.

It should be noted that canceling the prefetch request essentially means canceling the fetching of the prefetch data corresponding to the prefetch request from the memory into the cache, indicating that the usefulness of the prefetch data corresponding to the current prefetch request does not satisfy the prefetch conditions and that execution of the prefetch request needs to be canceled, thereby avoiding cache pollution. Generally, if the prefetch request is initiated by the prefetcher, a prefetch request cancellation notification also needs to be sent to the prefetcher so that the prefetcher can generate a new prefetch request.

It can be understood that, if the data utilization rate of the initial space is less than the threshold, this indicates that the usefulness of the data pre-stored in the initial space has decreased. Correspondingly, the usefulness of the prefetch data corresponding to the prefetch request also decreases. Therefore, the prefetch level of the prefetch request needs to be lowered so that it is lower than the initial prefetch level. Of course, if the initial prefetch level is the lowest prefetch level and the prefetch level of the prefetch request cannot be lowered below the initial prefetch level, this indicates that the prefetch data corresponding to the prefetch request does not satisfy the prefetch conditions, and the prefetch request is canceled to avoid cache pollution.

In one possible implementation, the initial space is the L2 space, and the initial prefetch level is level_L2. If the data utilization rate of the initial space is less than the threshold and level_L3 and level_LLC are below level_L2, the prefetch level of the prefetch request is determined to be level_L3 or level_LLC.

Preferably, if the data utilization rate of the initial space is less than the threshold and there are multiple prefetch levels below the initial prefetch level, the prefetch level of the prefetch request may be determined based on the lower level that is closest to the initial prefetch level. In one possible implementation, the initial space is the L2 space, and the initial prefetch level is level_L2. If the data utilization rate of the initial space is less than the threshold and level_L3 and level_LLC are below level_L2, the prefetch level of the prefetch request is determined to be level_L3.

Preferably, the thresholds corresponding to the respective spaces in the cache are different, and the lower the space level, the lower the corresponding threshold. The prefetch level of the prefetch request may also be determined in combination with the difference between the threshold corresponding to each space and the data utilization rate. In one possible implementation, the initial space is the L2 space, and the initial prefetch level is level_L2. If the data utilization rate of the initial space is 52%, level_L2 and level_L3 are above level_LLC, the threshold corresponding to the LLC space is 30%, the threshold corresponding to the L3 space is 50%, and the threshold corresponding to the L2 space is 80%. Based on the difference between the threshold corresponding to each space and the data utilization rate, it is determined that the difference between the threshold corresponding to the L3 space and the data utilization rate of the initial space is the smallest. Therefore, the prefetch level of the prefetch request is determined to be level_L3.

In one possible implementation, the initial space is the L3 space, and the initial prefetch level is level_L3. If the data utilization rate of the initial space is less than the threshold and level_LLC is below level_L3, the prefetch level of the prefetch request is determined to be level_LLC.

In one possible implementation, the initial space is the LLC space, and the initial prefetch level is level_LLC. If the data utilization rate of the initial space is less than the threshold and level_LLC is the lowest prefetch level, the prefetch request is canceled.

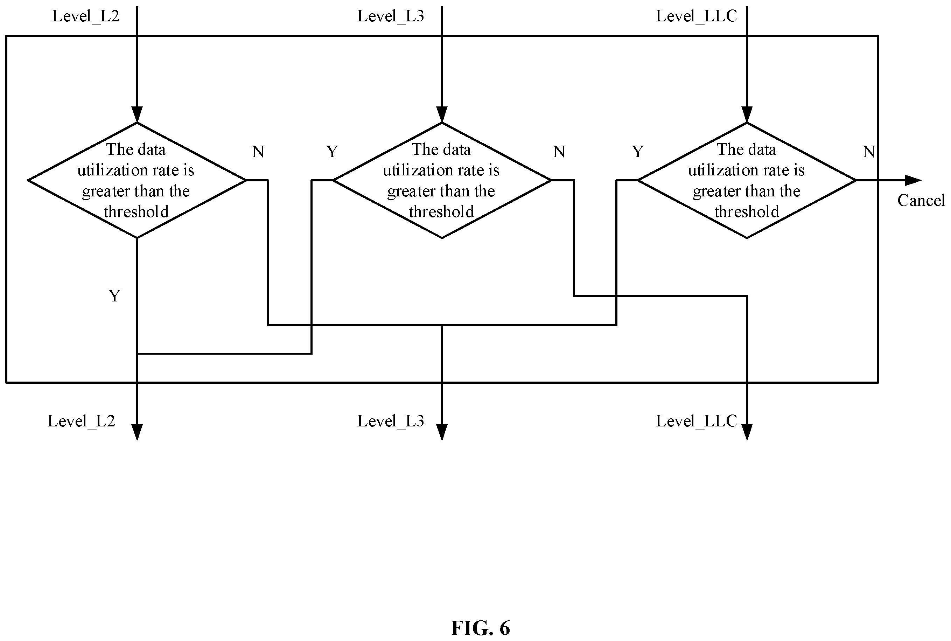

In some examples, the implementation process of determining the prefetch level of the prefetch request based on the data utilization rate of the initial space may be summarized as the operations shown in FIG. 6. For a prefetch request whose initial prefetch level is level_L2, if the data utilization rate of the L2 space corresponding to level_L2 is less than the threshold, the prefetch level of the prefetch request is adjusted to level_L3; if the data utilization rate of the L2 space is greater than or equal to the threshold, the prefetch level of the prefetch request is determined to be level_L2. For a prefetch request whose initial prefetch level is level_L3, if the data utilization rate of the L3 space corresponding to level_L3 is less than the threshold, the prefetch level of the prefetch request is adjusted to level_LLC; if the data utilization rate of the L3 space is greater than or equal to the threshold, the prefetch level of the prefetch request is adjusted to level_L2. For a prefetch request whose initial prefetch level is level_LLC, if the data utilization rate of the LLC space corresponding to level_LLC is less than the threshold, the prefetch request is canceled; if the data utilization rate of the LLC space is greater than or equal to the threshold, the prefetch level of the prefetch request is adjusted to level_L3.

In the process shown in S401-S405, through dynamic adjustment of the prefetch level based on the data utilization rate of the initial space, prefetch data is adaptively redistributed among cache spaces of different space levels, thereby improving cache utilization while maintaining both prefetch coverage and prefetch accuracy.

### Embodiment 5

As shown in FIG. 5, a schematic flowchart of another data prefetch method according to an embodiment of the present disclosure is illustrated, which includes the following operations.

S501: A target space whose space level matches the prefetch level of the prefetch request is determined.

The target space whose space level matches the prefetch level of the prefetch request may be determined based on a preset matching relationship between space levels and prefetch levels.

In some examples, the preset matching relationship between space levels and prefetch levels is as follows: L2 matches level_L2, L3 matches level_L3, and L4 matches level_LLC.

S502: A response status of the target space is determined based on data requests responded to by the target space.

The data access frequency of the target space may be determined through data requests responded to by the target space, thereby further determining the response status of the target space.

In some examples, the data access frequency may be determined based on the total number of data requests. In some embodiments, the specific implementation process of determining the response status of the target space based on data requests responded to by the target space may include: determining the total number of data requests responded to by the target space within a unit time; if the total number satisfies a specified quantity condition, determining that the response status of the target space is busy; and if the total number does not satisfy the specified quantity condition, determining that the response status of the target space is idle.

In some examples, the response status of the target space may also be determined based on the cache occupancy of the target space. In one possible implementation, if the cache occupancy is greater than a specified threshold, the response status of the target space is determined to be busy; and if the cache occupancy is less than or equal to the specified threshold, the response status of the target space is determined to be idle.

S503: If the response status of the target space is idle, the prefetch data corresponding to the prefetch request is fetched from the memory into the target space.

If the response status of the target space is idle, this indicates that the data pre-stored in the target space will not be interfered with by the prefetch data. Fetching the prefetch data corresponding to the prefetch request from the memory into the target space also will not affect the CPU's access to data in the target space.

In one possible implementation, the target space is the L2 space. If the response status of the L2 space is idle, the prefetch data corresponding to the prefetch request is fetched from the memory into the L2 space.

S504: If the response status of the target space is busy, the prefetch data corresponding to the prefetch request is fetched from the memory into a first space.

The first space includes a space whose space level is lower than the space level of the target space and whose response status is idle. The usefulness of data stored in the first space is lower than the usefulness of data stored in the target space.

It should be noted that, if the response status of the target space is busy and the prefetch data corresponding to the prefetch request is nevertheless fetched from the memory into the target space, the CPU's data access may be affected. Therefore, the prefetch data corresponding to the prefetch request may instead be fetched from the memory into the first space.

In one possible implementation, the target space is the L2 space. If the response status of the L2 space is busy, the space level of the L2 space is higher than those of the L3 space and the LLC space, and the response statuses of both the L3 space and the LLC space are idle, the prefetch data corresponding to the prefetch request may be fetched from the memory into either the L3 space or the LLC space.

Preferably, if the response status of the target space is busy and the response statuses of multiple other spaces having space levels lower than that of the target space are idle, the prefetch data corresponding to the prefetch request may be fetched from the memory into the space whose space level is closest to that of the target space among the multiple other spaces. In one possible implementation, the target space is the L2 space. If the response status of the L2 space is busy, the space level of the L2 space is higher than those of the L3 space and the LLC space, the space level of the L3 space is higher than that of the LLC space, and the response statuses of both the L3 space and the LLC space are idle, the prefetch data corresponding to the prefetch request is fetched from the memory into the L3 space.

In one possible implementation, the target space is the L2 space. If the response status of the L2 space is busy, the space level of the L2 space is higher than those of the L3 space and the LLC space, the response status of the L3 space is busy, and the response status of the LLC space is idle, the prefetch data corresponding to the prefetch request may be fetched from the memory into the LLC space.

In one possible implementation, the target space is the L3 space. If the response status of the L3 space is busy, the space level of the L3 space is higher than that of the LLC space, and the response status of the LLC space is idle, the prefetch data corresponding to the prefetch request may be fetched from the memory into the LLC space.

It should be emphasized that, if the response status of the target space is busy and the response statuses of the other spaces having space levels higher than that of the target space are idle, the prefetch data corresponding to the prefetch request is prohibited from being fetched from the memory into the other spaces, so as to avoid causing cache pollution in the other spaces due to the prefetch data (based on the classification of space levels, the usefulness of data in the other spaces having space levels higher than that of the target space is higher than that of the prefetch data. Fetching the prefetch data into the other spaces replaces data having higher usefulness in the other spaces, thereby causing cache pollution and reducing the accuracy of data prefetch).

S505: If the response status of the target space is busy and the space level of the target space is the lowest space level, the prefetch request is canceled.

If the response status of the target space is busy and the space level of the target space is the lowest space level, this indicates that the prefetch data corresponding to the prefetch request can no longer be fetched from the memory into the cache, because execution of the prefetch request would affect the CPU's access to data in the cache. Therefore, the prefetch request is canceled.

In one possible implementation, the target space is the LLC space. If the response status of the LLC space is busy and the space level of the LLC space is the lowest space level, the prefetch request may be canceled.

In some examples, the specific implementation process of determining execution of the prefetch request based on the response status of the target space may be summarized as the operations shown in FIG. 7. For a prefetch request whose prefetch level is level_L2, if the response status of the L2 space is idle, the prefetch data corresponding to the prefetch request is fetched from the memory into the L2 space. If the response status of the L2 space is busy and the response status of the L3 space is idle, the prefetch data corresponding to the prefetch request is fetched from the memory into the L3 space. If the response statuses of the L2 space and the L3 space are busy and the response status of the LLC space is idle, the prefetch data corresponding to the prefetch request is fetched from the memory into the LLC space. If the response statuses of the L2 space, the L3 space, and the LLC space are busy, the prefetch request is canceled. For a prefetch request whose prefetch level is level_L3, if the response status of the L3 space is idle, the prefetch data corresponding to the prefetch request is fetched from the memory into the L3 space. If the response status of the L3 space is busy and the response status of the LLC space is idle, the prefetch data corresponding to the prefetch request is fetched from the memory into the LLC space. If the response statuses of the L3 space and the LLC space are busy, the prefetch request is canceled. For a prefetch request whose prefetch level is level_LLC, if the response status of the LLC space is idle, the prefetch data corresponding to the prefetch request is fetched from the memory into the LLC space. If the response status of the LLC space is busy, the prefetch request is canceled.

It can be understood that, in the process shown in FIG. 7, for a prefetch request whose prefetch level is level_L3, if the response statuses of the L3 space and the LLC space are busy and the response status of the L2 space is idle, fetching the prefetch data corresponding to the prefetch request from the memory into the L2 space is prohibited in order to avoid causing cache pollution in the L2 space. Therefore, the prefetch request is canceled.

Through the process shown in S501-S505, by dynamically selecting a cache space according to the response status of the target space, the disclosed solution avoids interference with active cache accesses while adaptively selecting an appropriate destination cache space for the prefetch data, thereby reducing cache pollution and improving overall cache efficiency.

### Embodiment 6

Corresponding to the data prefetch method provided in the foregoing embodiments of the present disclosure, the present disclosure further provides a data prefetch apparatus.

As shown in FIG. 10, a schematic architecture diagram of a data prefetch apparatus according to an embodiment of the present disclosure is illustrated, which includes the following units.

A request determination unit 100, configured to obtain a prefetch request, where the prefetch request is used to indicate prefetch data to be fetched from memory into a cache, and the cache includes a plurality of spaces having different space levels.

A level determination unit 200, configured to determine, based on historical data requests of a cache data user, a prefetch level of the prefetch request, where the prefetch level is used to represent the usefulness of the prefetch data.

In some embodiments, the level determination unit 200 is specifically configured to: determine, based on historical data requests of a cache data user, a confidence level of the prefetch request; the confidence level is used to represent the probability that the prefetch data corresponding to the prefetch request will be used by the cache data user; determine the prefetch level of the prefetch request based on the confidence level of the prefetch request; where a higher confidence level corresponds to a higher prefetch level.

In some embodiments, the level determination unit 200 is specifically configured to: determine, based on historical data requests of a cache data user, an initial prefetch level of the prefetch request; determine, based on a preset matching relationship between space levels and prefetch levels, an initial space whose space level matches the initial prefetch level; and determine the prefetch level of the prefetch request based on data characteristics of the initial space.

In some embodiments, the data characteristics include a data utilization rate, where the data utilization rate is determined based on the number of data prefetches and the number of data hits during a historical period. The level determination unit 200 is specifically configured to: determine the data utilization rate of the initial space; and, if the data utilization rate of the initial space satisfies the threshold, determine the initial prefetch level as the prefetch level of the prefetch request based on the initial prefetch level.

In some embodiments, the level determination unit 200 is specifically configured to: if the data utilization rate of the initial space is greater than the threshold, determine that the prefetch level of the prefetch request is higher than the initial prefetch level; where, if the initial prefetch level is the highest prefetch level, determine the initial prefetch level as the prefetch level of the prefetch request based on the initial prefetch level.

In some embodiments, the level determination unit 200 is specifically configured to: if the data utilization rate of the initial space is less than the threshold, determine that the prefetch level of the prefetch request is lower than the initial prefetch level; where, if the initial prefetch level is the lowest prefetch level, cancel the prefetch request.

A data extraction unit 300, configured to fetch the prefetch data corresponding to the prefetch request from the memory into a space whose space level matches the prefetch level of the prefetch request.

In some embodiments, the data extraction unit 300 is specifically configured to: determine a target space whose space level matches the prefetch level of the prefetch request; determine the response status of the target space based on data requests responded to by the target space; and, if the response status of the target space is idle, fetch the prefetch data corresponding to the prefetch request from the memory into the target space.

In some embodiments, the data extraction unit 300 is specifically configured to: if the response status of the target space is busy, fetch the prefetch data corresponding to the prefetch request from the memory into a first space; the first space includes a space whose space level is lower than the space level of the target space and whose response status is idle; and the usefulness of data stored in the first space is lower than the usefulness of data stored in the target space.

In some embodiments, the data extraction unit 300 is specifically configured to: if the response status of the target space is busy and the space level of the target space is the lowest space level, cancel the prefetch request.

Through the respective units described above, by determining the prefetch level of the prefetch request and fetching the prefetch data corresponding to the prefetch request from the memory into a space whose space level matches the prefetch level, useless prefetch data can be prevented from being fetched into the cache, thereby avoiding cache pollution. In addition, based on the matching between the prefetch level and the space level, the coverage of data prefetch can be improved, thereby balancing the accuracy and coverage of data prefetch.

The present disclosure further provides a non-transitory computer-readable storage medium. The computer-readable storage medium includes a stored program, where the program, when executed, performs the data prefetch method provided in the present disclosure.

The present disclosure further provides an electronic device, including: a processor, a memory, and a bus. The processor is connected to the memory through the bus, the memory is configured to store a program, and the processor is configured to execute the program, where the program, when executed, performs the data prefetch method provided in the present disclosure.

Although the subject matter has been described using language specific to structural features and/or methodological acts, it should be understood that the subject matter defined in the appended claims is not necessarily limited to the specific features or acts described above. Instead, the specific features and acts described above are merely example forms for implementing the claims.

Although the foregoing discussion includes a number of specific implementation details, these should not be construed as limiting the scope of the present disclosure. Certain features described in the context of individual embodiments may also be implemented in combination in a single embodiment. Conversely, various features described in the context of a single embodiment may also be implemented individually or in any suitable subcombination in multiple embodiments.

The foregoing description merely presents preferred embodiments of the present disclosure and explains the technical principles employed. A person of ordinary skill in the art should understand that the scope of the disclosure involved in the present disclosure is not limited to the technical solutions formed by the specific combinations of the technical features described above, but also covers other technical solutions formed by any combination of the above technical features or their equivalent features without departing from the above disclosed concept. For example, the foregoing features may be mutually replaced with technical features disclosed in the present disclosure (including, but not limited to, technical features having similar functions) to form corresponding technical solutions.

## Claims

1. A data prefetch method, comprising:
obtaining a prefetch request, wherein the prefetch request is used to indicate prefetch data to be fetched from memory into a cache; wherein the cache comprises a plurality of spaces having different space levels;
determining, based on historical data requests of a cache data user, a prefetch level of the prefetch request; wherein the prefetch level is used to represent the usefulness of the prefetch data; and
fetching the prefetch data corresponding to the prefetch request from the memory into a space whose space level matches the prefetch level of the prefetch request.

2. The method according to claim 1, wherein fetching the prefetch data corresponding to the prefetch request from the memory into a space whose space level matches the prefetch level of the prefetch request comprises:
determining a target space whose space level matches the prefetch level of the prefetch request; determining a response status of the target space based on data requests responded to by the target space; and
in response to the response status of the target space being idle, fetching the prefetch data corresponding to the prefetch request from the memory into the target space.

3. The method according to claim 2, wherein in response to the response status of the target space being busy, the prefetch data corresponding to the prefetch request is fetched from the memory into a first space; wherein the first space comprises a space whose space level is lower than the space level of the target space and whose response status is idle; and wherein the usefulness of data stored in the first space is lower than the usefulness of data stored in the target space.

4. The method according to claim 2, wherein in response to the response status of the target space being busy and the space level of the target space being the lowest space level, the prefetch request is canceled.

5. The method according to claim 1, wherein determining the prefetch level of the prefetch request based on historical data requests of a cache data user comprises:
determining, based on historical data requests of the cache data user, a confidence level of the prefetch request; wherein the confidence level is used to represent a probability that the prefetch data corresponding to the prefetch request is used by the cache data user; and
determining the prefetch level of the prefetch request based on the confidence level of the prefetch request; wherein a higher confidence level corresponds to a higher prefetch level.

6. The method according to claim 1 or 5, wherein determining the prefetch level of the prefetch request based on historical data requests of a cache data user comprises:
determining, based on historical data requests of the cache data user, an initial prefetch level of the prefetch request;
determining, based on a preset matching relationship between space levels and prefetch levels, an initial space whose space level matches the initial prefetch level; and
determining the prefetch level of the prefetch request based on data characteristics of the initial space.

7. The method according to claim 6, wherein the data characteristics comprise a data utilization rate, the data utilization rate being determined based on a number of data prefetches and a number of data hits during a historical period, wherein determining the prefetch level of the prefetch request based on the data characteristics of the initial space comprises:
determining the data utilization rate of the initial space; and
in response to the data utilization rate of the initial space satisfying a threshold, determining the initial prefetch level as the prefetch level of the prefetch request based on the initial prefetch level.

8. The method according to claim 7, wherein in response to the data utilization rate of the initial space being greater than the threshold, determining that the prefetch level of the prefetch request is higher than the initial prefetch level; wherein, in response to the initial prefetch level being the highest prefetch level, determining the initial prefetch level as the prefetch level of the prefetch request based on the initial prefetch level.

9. The method according to claim 7, wherein in response to the data utilization rate of the initial space being less than the threshold, determining that the prefetch level of the prefetch request is lower than the initial prefetch level; wherein, in response to the initial prefetch level being the lowest prefetch level, canceling the prefetch request.

10. A data prefetch apparatus, comprising:
a request determination unit, configured to obtain a prefetch request, wherein the prefetch request indicates prefetch data to be fetched from a memory into a cache, the cache comprising a plurality of spaces having different space levels;
a level determination unit, configured to determine, based on historical data requests of a cache data user, a prefetch level of the prefetch request, the prefetch level representing usefulness of the prefetch data; and
a data extraction unit, configured to fetch the prefetch data corresponding to the prefetch request from the memory into a space having a space level matching the prefetch level of the prefetch request.

11. The apparatus of claim 10, wherein the data extraction unit is further configured to:
determine a target space having a space level matching the prefetch level of the prefetch request;
determine a response status of the target space based on data requests responded to by the target space; and
in response to determining that the response status of the target space is idle, fetch the prefetch data corresponding to the prefetch request from the memory into the target space.

12. The apparatus of claim 11, wherein the data extraction unit is further configured to:
in response to determining that the response status of the target space is busy, fetch the prefetch data corresponding to the prefetch request from the memory into a first space,
wherein the first space comprises a space having a space level lower than the space level of the target space and having an idle response status, and
wherein usefulness of data stored in the first space is lower than usefulness of data stored in the target space.

13. The apparatus of claim 11, wherein the data extraction unit is further configured to:
in response to determining that the response status of the target space is busy and the space level of the target space is a lowest space level, cancel the prefetch request.

14. The apparatus of claim 10, wherein the level determination unit is further configured to:
determine, based on the historical data requests of the cache data user, a confidence level of the prefetch request, the confidence level representing a probability that the prefetch data corresponding to the prefetch request will be used by the cache data user; and
determine the prefetch level of the prefetch request based on the confidence level, wherein a higher confidence level corresponds to a higher prefetch level.

15. The apparatus of claim 10 or 14, wherein the level determination unit is further configured to:
determine, based on the historical data requests of the cache data user, an initial prefetch level of the prefetch request;
determine, based on a preset matching relationship between space levels and prefetch levels, an initial space having a space level matching the initial prefetch level; and
determine the prefetch level of the prefetch request based on data characteristics of the initial space.

16. The apparatus of claim 15, wherein:
the data characteristics comprise a data utilization rate determined based on a number of data prefetches and a number of data hits during a historical period,
and the level determination unit is further configured to:
determine the data utilization rate of the initial space; and
in response to determining that the data utilization rate satisfies a threshold, determine the initial prefetch level as the prefetch level of the prefetch request.

17. The apparatus of claim 16, wherein the level determination unit is further configured to:
in response to determining that the data utilization rate of the initial space is greater than the threshold,
determine that the prefetch level of the prefetch request is higher than the initial prefetch level,
wherein, in response to determining that the initial prefetch level is a highest prefetch level, the level determination unit determines the initial prefetch level as the prefetch level of the prefetch request.

18. The apparatus of claim 16, wherein the level determination unit is further configured to:
in response to determining that the data utilization rate of the initial space is less than the threshold,
determine that the prefetch level of the prefetch request is lower than the initial prefetch level,
wherein, in response to determining that the initial prefetch level is a lowest prefetch level, the level determination unit cancels the prefetch request.
